# EUROPEAN PATENT APPLICATION

(11) **EP 1 174 651 A2**
(43) Date of publication of application: **23.01.2002**
(21) Application number: 01117487.7
(22) Date of filing: 19.07.2001
(51) Int. Cl.: F16K 31/04

(54) **Device for driving of valves**

(30) Priority: 20.07.2000 IT MI001659
(71) Applicant: Alfa Valvole S.R.L., 20010 Casorezzo (Milano) (IT)
(72) Inventor: Fontana, Alvaro, 20010 Casorezzo (Milano) (IT)
(74) Representative: Cicogna, Franco

(57) **Abstract**

A plug-in device for performing an emergency driving of actuated valves comprises a box-like body (20) forming a housing chamber between a valve body (12) and an actuator (21), to which it is coupled by bolts (19), said device further comprising a shaft (2) extending from the actuator (21), and a top coupling (3) operating on a further coupling (4), and which is made rigid with the latter through a metal pin (13).

## Description

### BACKGROUND OF THE INVENTION

The present invention relates to a plug-in device for manually driving, in an emergency condition, actuated valves in general.

As is known, a very important problem in the thermohydraulic field, is that to provide automatically opened and closed valves which, in an emergency or fault condition, could also be manually operated.

In this connection it should be apparent that in a regular operation of the actuator, such a valve would be automatically opened or closed, by a suitable servocontrol unit.

On the contrary, in a case of a fault or malfunction, the actuator must be properly disengaged from the servocontrol driving system, in order to manually operate the valves while excluding any possible operations of the servocontrol system.

In such a case, the device must comprise a mechanism designed for properly switching on and off the above mentioned servocontrol.

Such a mechanism must be accessed and operated in a very quick and easy manner.

Actuated valve are already known which are actuated by automatic means controlling the fluid of the valve operating fluid flowing through said valve.

The above mentioned automatic driving means are in turn driven by pneumatic, hydraulic and electronic means.

However, an electric power failure or an actuator fault could prevent the valves from properly operating, thereby the overall system controlled by said valves could in turn malfunction.

In order to solve the above mentioned problem, automatic or semiautomatic valves also including manual driving means have been already designed.

However, a great problem affecting the above mentioned solutions, is that the manual driving system is very complex construction wise, and its switching on and off operations are also very complex and require a lot of time.

Anyhow, the above mentioned manual mechanisms can be switched off exclusively from a functional standpoint.

Furthermore, the linkage and manual driving devices included in prior manually operated emergency systems, provided for mechanically turning the control and driving means thereof, are of a comparatively great size and moreover very expensive.

Thus, the above mentioned solutions, even if they represent a possible alternative system, are neither safe nor practical in operation.

### SUMMARY OF THE INVENTION

Accordingly, the aim of the present invention is to provide the hydro-thermal-sanitary field with a plug-in device for performing emergency driving operations of actuated valves.

In particular, said device is arranged between the valve and the automatic actuator system, and can be removed therefrom.

Said device, moreover, can be coupled in a plug-in manner, since both the actuator casing and valve, as well as the valve driving elements, are construction wise set to provide these functions.

The inventive device, in particular, allows to quickly switch off the driving means of the valve driven by the automatic actuator.

A further object of the present invention is to further allow a switched-off element, not pertaining to the system, to be easily switched-on or plugged-in by a simple manual rotary movement, allowing to directly operate the valve to its opening and/or closing condition.

Yet another object of the present invention is to provide such a device which is very reliable and safe in operation.

Yet another object of the present invention is to provide such a plug-in device which is very competitive from a mere economic standpoint.

According to one aspect of the present invention, the above mentioned aim and objects, as well as yet other objects, which will become more apparent hereinafter, are achieved by a plug-in device for manually driving actuated valves in general, in an emergency condition, characterized in that said plug-in device comprises a metal box-like body forming a housing chamber for said plug-in device, a shaft passing through said chamber, said shaft ending with a top articulated coupling, said top articulated coupling affecting a further articulated coupling having a hole for plugging-in a lever therein and an end spindle, coupled to the valve ball.

### BRIEF DESCRIPTION OF THE DRAWINGS

Further characteristics and advantages of the present invention will become more apparent hereinafter from the following detailed disclosure of a preferred, though not exclusive, embodiment of a plug-in device designed for manually operating, in an emergency condition, actuated valves in general, said plug-in device being illustrated, by way of an indicative, but not limitative, example in the figures of the accompanying drawings, where:

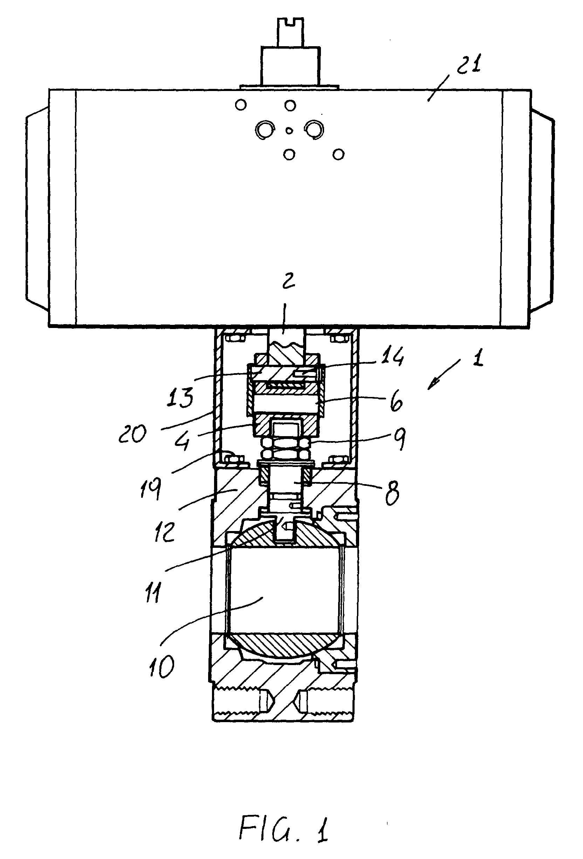

Figure 1 is a side view, as partially cross-sectioned, illustrating the plug-in device, provided for performing manual emergency operations of actuated valves in general, according to the invention, including an automatic actuator, arranged at a top position;

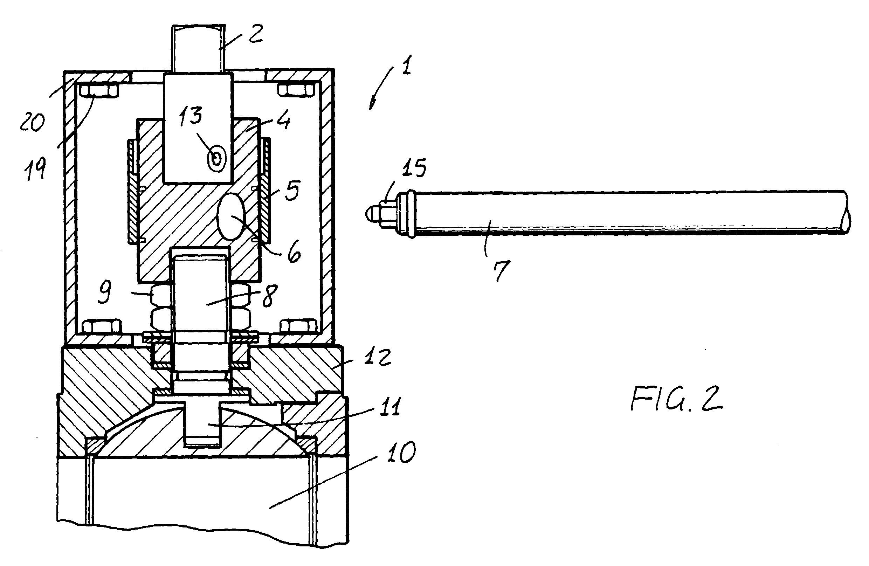

Figure 2 is a further side cross-sectioned view illustrating a detail related to the sole plug-in device according to the present invention;

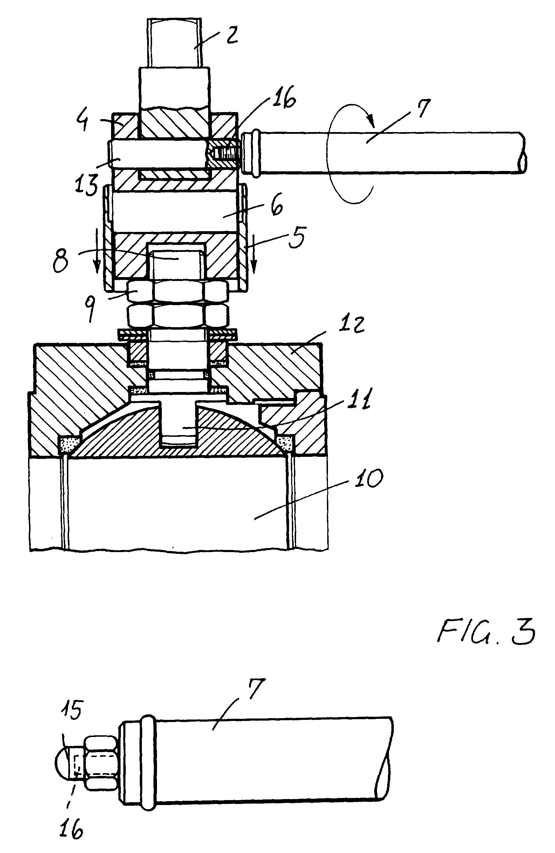

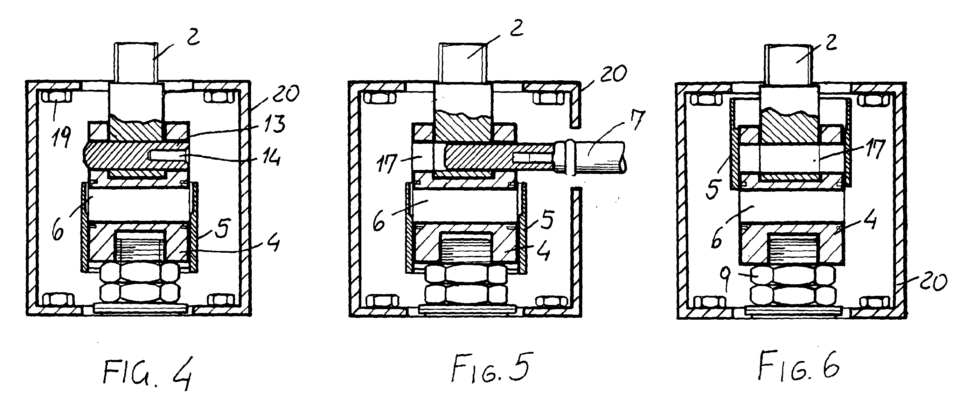

Figure 3 is a partial cross-sectioned view illustrating an operating step in which a lever is screwed-on for withdrawing a locking pin element allowing a direct coupling with the actuator;
Figures 4, 5 and 6 are partial cross-sectional views illustrating, from the left to the right, the steps for withdrawing the locking pin, for allowing a transmissive direct coupling with the actuator;

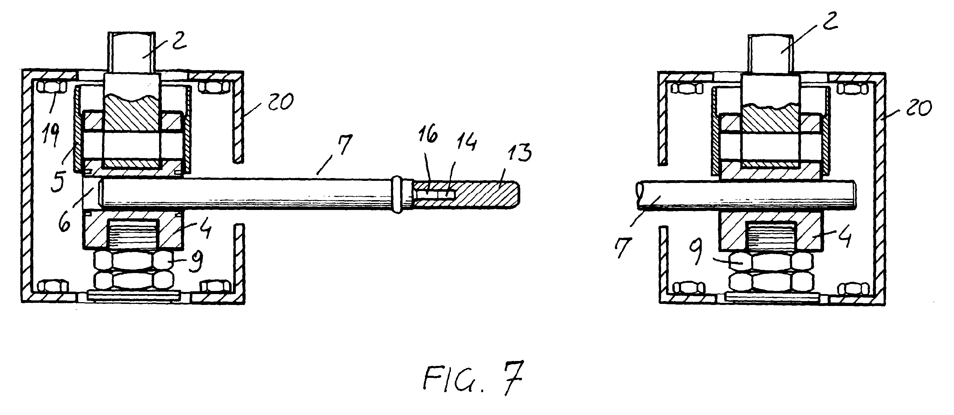

Figure 7 shows, likewise to figures 4, 5 and 6, from the left to the right, the valve ball manually turning operations, by using a lever arranged in a seat therefor.

### DESCRIPTION OF THE PREFERRED EMBODIMENTS

With reference to the number references of the above mentioned figures, the plug-in device for manually driving, in an emergency condition, actuated valves in general according to the present invention, and which has been generally indicated by the reference number 1, comprises a metal cage element 20, forming a housing chamber between the valve body 12 and actuator 21, to which it is coupled by bolts 19.

The plug-in device comprises moreover a top coupling 2, connecting the actuator 21 to a further central coupling 4.

The top coupling 2 is rigidly coupled to said central coupling 4 by a metal pin 13.

The central coupling 4 is provided with a cylindric throughgoing seat 6, the diameter of which is equal to that of a lever 7 used for manually operating the valve to its opening and closing positions.

The central coupling 4 is connected to and operates with the shaft 8 which is suitably clamped by nuts 9 to said metal cage 20 and, through an abutment means 11 operating on the valve ball 10.

The central coupling 4 is encompassed by a protective tube 5 which, as it is caused to slide downward, allows the locking pin 13 to be exposed or accessed.

Moreover, as said protective tube 5 is upward slidably driven (which would be possible only after having removed the locking pin 13), it will uncover the seat 6 for housing the driving lever 7 for performing the mentioned manual driving operation.

More specifically, the driving operations for driving the plug-in device for performing manual emergency operations on the actuated valve, provide a removal of the covering cap 15 of the lever 7, which, at this same end portion thereof is provided with a threaded peg 16, or pin, on which is engaged a counter-thread of a metal cap 15.

Then, the mentioned protective tube 5 is downward displaced in order to uncover the pin 13.

At this moment, the pin 16 is screwed or threaded in its seat 14, also having a mating thread, of the pin 13.

Upon having screw engaged the end portion of the lever 7 to the pin 13, the latter can be withdrawn by simply pulling it outward.

Upon withdrawing or removing the pin 13, thereby providing an empty seat 17, the top coupling 2 will able of freely turning with respect to the central coupling 4, the valve being disengaged from the actuator 21.

At this time, it is possible to rise the protective tube 5, thereby uncovering the hole or seat 6 for plugging-in the lever 7.

Then, by turning the lever 7 through 180° it is possible to hold the pin 13 screw engaged to the lever, thereby allowing said pin in a ready for operation condition.

Simultaneously, the operating lever 7 can be engaged in the seat 6, at the end opposite to the end portion thereof engaged by said pin 13.

At this time, the operator can manually drive the valve.

In oder to bring the system to the starting position again, the following operations must be performed: the lever 10 must be removed for the engagement hole 6, the protective tube 5 must be raised, the lever must be turned through 180°, the pin 13 must be engaged again in the seat 17, while screwing off the lever 10 and screwing on the protective nut 15 on the pin 16, and, finally, the protective tube 5 mst be brought to the middle position again.

From the above disclosure it should be apparent that the invention fully achieves the intended aim and objects.

In particular, the fact is to be pointed out that a plug-in device for manually driving, in an emergency condition, actuated valves in general, which is construction wise very simple and of quick operation, has been provided.

The invention, as disclosed, is susceptible to several modifications and variations, all of which will come within the inventive idea scope.

Moreover, all the constructional details can be replaced by other technically equivalent elements.

In practicing the invention, the used materials, as well as the contingent size and shapes, can be any depending on requirements.

## Claims

1. A plug-in device for manually driving, in an emergency condition, actuated valves in general, **characterized in that** said plug-in device comprises a cage body (20) defining a connection between a valve body (12) and an actuator (21), to which said cage body is coupled through bolts (19), a top coupling (2) connecting the actuator (21) to a central coupling (4) and being made rigid with the latter through a metal pin (13).

2. A plug-in device for manually driving, in an emergency condition, actuated valves, according to Claim 1, **characterized in that** said top coupling (2) comprises a cylindric throughgoing seat (17) which can be either engaged or not by a metal pin (13), and that said central coupling (4) comprises a throughgoing plug-in cylindric seat (6), which can be either or not engaged by a lever (7).

3. A plug-in device for manually driving, in an emergency condition, actuated valves, according to Claims land 2, **characterized in that** said central coupling (4) is encompassed by a protective tube (5) which, as it is downward slidably driven, allows said pin (13) to be uncovered or, as it is upward slidably driven, allows said plug-in seat (6) to be uncovered.

4. A plug-in device for manually driving, in an emergency condition, actuated valves, according to the preceding claim, **characterized in that** said pin (13) comprises a threaded seat (14) which can be either or not engaged by a threaded pin (16) of an operating lever (7), and that it can be withdrawn from or plugged-in said seat (17), upon screwing on said pin (16).

5. A plug-in device for manually driving, in an emergency condition, actuated valves, according to one or more of the preceding claims, **characterized in that** said central coupling (4) is connected to and operates with a shaft (8) clamped by nuts (9) to said box-like body (20) and being rigid with an abutment means (11) operating on a ball (10) of said valve.

6. A plug-in device for manually driving, in an emergency condition, actuated valves, according to one or more of the preceding claims, **characterized in that** by withdrawing said metal pin (13) from said seat (17) of said top coupling (2), said top coupling (2) can freely turn with respect to said central coupling (4), said valve being fully disengaged from said actuator (21), for allowing an operator to manually drive said valve upon having engaged said lever (7) in said plug-in seat (6).

7. A plug-in device for manually driving, in an emergency condition, actuated valves, according to one or more of the preceding claims, **characterized in that** the connection of said valve to said actuator (21), for automatically driving said valve, and the disconnection of said valve from said actuator (21), for fully manually driving said valve, are reversible and mutually possible operations.

8. A plug-in device for manually driving, in an emergency condition, actuated valves, according to one or more of the preceding claims, and as broadly disclosed and illustrated in the preceding disclosure and several figures of the accompanying drawings, constituting an integrating part of the present Industrial Invention Patent Application.
